# EUROPEAN PATENT APPLICATION

(11) **EP 4 700 848 A1**
(43) Date of publication of application: **25.02.2026**
(21) Application number: 25197495.2
(22) Date of filing: 22.08.2025
(51) Int. Cl.: H01M 4/133, C08F 220/00, H01M 4/134, H01M 4/38, H01M 4/587, H01M 4/62, H01M 4/02

(54) **NEGATIVE ELECTRODE AND RECHARGEABLE LITHIUM BATTERY INCLUDING THE SAME**

(30) Priority: 22.08.2024 KR 20240112988; 21.08.2025 KR 20250116505
(71) Applicant: SAMSUNG SDI CO., LTD., Yongin-si, Gyeonggi-do 17084 (KR)
(72) Inventor: Park, Sujin, 17084 Gyeonggi-do (KR); Lee, Kukjoo, 17084 Gyeonggi-do (KR); Jung, Kyunghwa, 17084 Gyeonggi-do (KR); Cho, Yunshik, 17084 Gyeonggi-do (KR)
(74) Representative: Meissner Bolte Partnerschaft mbB

(57) **Abstract**

The present invention relates to a negative electrode, wherein the electrode includes a current collector, and a negative electrode active material layer located on the current collector and including a negative electrode active material and a high ionic conductive binder. The high ionic conductive binder includes a first structural unit derived from a (meth)acrylic acid-based monomer, a second structural unit derived from a (C1-C10) alkylene glycol-based monomer, and a third structural unit derived from a zwitterionic vinyl-based monomer or a zwitterionic (meth)acryl-based monomer. A thickness of the negative electrode active material layer is greater than or equal to about 40 µm. The negative electrode can increase the energy density of a rechargeable lithium battery, while reducing the volume and weight of the rechargeable lithium battery and contributing to improving rapid charging performance.

## Description

### BACKGROUND

### 1. Field

Negative electrodes, and rechargeable lithium batteries including negative electrodes, are disclosed.

### 2. Description of the Related Art

With increasing presence of electronic devices that use batteries, such as, e.g., mobile phones, laptop computers, and electric vehicles, the demand for small, lightweight, and relatively high-capacity rechargeable batteries is increasing. In particular, rechargeable lithium batteries may be useful as a power source for portable devices because they are lightweight and have high energy density.

Rechargeable lithium batteries typically include a positive electrode and a negative electrode including an active material capable of intercalating and deintercalating lithium ions, and an electrolyte, and electrical energy is produced through oxidation and reduction reactions when lithium ions are intercalated and deintercalated from the positive electrode and negative electrode. A negative electrode that increases the energy density of rechargeable lithium batteries, reduces the volume and weight of rechargeable lithium batteries, and improves rapid charging performance may be advantageous.

### SUMMARY

The present invention relates to a negative electrode that increases the energy density of a rechargeable lithium battery, reduces the volume and weight of the rechargeable lithium battery, and improves rapid charging performance.

A negative electrode according to the invention includes a current collector; and a negative electrode active material layer located on the current collector and including a negative electrode active material and a high ionic conductive binder. The high ionic conductive binder includes a first structural unit derived from a (meth)acrylic acid-based monomer, a second structural unit derived from a (C1-C10) alkylene glycol-based monomer and a third structural unit derived from a zwitterionic vinyl-based monomer or a zwitterionic (meth)acryl-based monomer. A thickness of the negative electrode active material layer is greater than or equal to about 40 µm.

The present invention further relates to a rechargeable lithium battery including the negative electrode, a positive electrode and an electrolyte.

The negative electrode according to the invention can increase the energy density of a rechargeable lithium battery, while reducing the volume and weight of the rechargeable lithium battery and contributing to improving rapid charging performance.

### BRIEF DESCRIPTION OF THE DRAWINGS

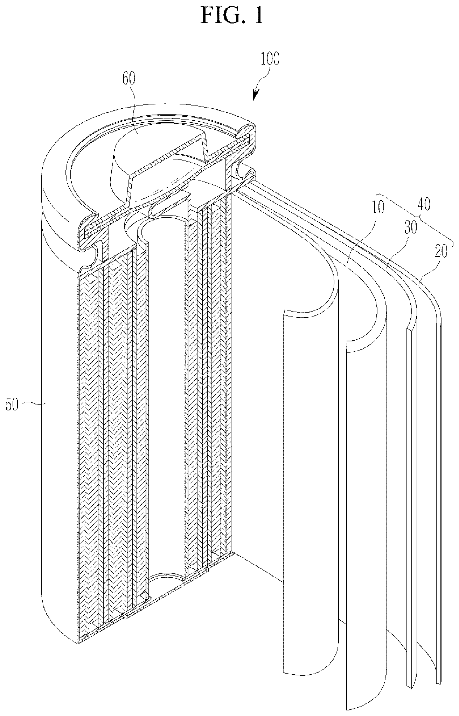

FIGS. 1 to 4 are views schematically illustrating a rechargeable lithium battery, according to some example embodiments.

### DETAILED DESCRIPTION

Hereinafter, example embodiments of the present disclosure are described in detail. However, these embodiments are exemplary, the present disclosure is not limited thereto and the present disclosure is defined by the scope of claims.

As used herein, when specific definition is not otherwise provided, it is understood that when an element such as a layer, film, region, or substrate is referred to as being "on" another element, the element may be directly on the other element, or intervening elements may also be present.

As used herein, when specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. This average particle diameter indicates an average particle diameter (D50), which is a diameter of particles with a cumulative volume of 50 volume% in the particle size distribution. The average particle diameter (D50) can be measured by methods known to those skilled in the art, for example, by measuring with a particle size analyzer, a transmission electron microscope or scanning electron microscope. Alternatively, a dynamic light-scattering measurement device may be used to perform a data analysis, and the number of particles is counted for each particle size range. From this, the average particle diameter (D50) value may be readily obtained through a calculation. A laser diffraction method may also be used. When measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D50) based on 50% of the particle size distribution in the measuring device can be calculated.

As used herein, when a specific definition thereof is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, when a specific definition thereof is not otherwise provided, "substituted" refers to replacement of at least one hydrogen atom by a substituent such or at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and a combination thereof.

As used herein, when a specific definition thereof is not otherwise provided, "hetero" indicates that the chemical formula contains at least one hetero atom of at least one of N**,** O, S, and P.

Additionally, as used herein, when specific definition is not otherwise provided, "(meth)acrylate" indicates both "acrylate" and "methacrylate," and "(meth)acrylic acid" indicates both "acrylic acid" and "methacrylic acid."

As used herein, when a specific definition thereof is not otherwise provided, "combination" refers to mixing or copolymerization.

In chemical formulas of the present specification, when a specific definition thereof is not otherwise provided, hydrogen is bonded at the position when a chemical bond is not drawn where supposed to be given.

In this specification, the weight average molecular weight (Mw) may be a value measured using gel permeation chromatography (GPC).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Negative Electrode

A negative electrode according to the invention includes a current collector and a negative electrode active material layer located on the current collector and including a negative electrode active material and a high ionic conductive binder. The high ionic conductive binder includes a first structural unit derived from a (meth)acrylic acid-based monomer, a second structural unit derived from a (C1-C10) alkylene glycol-based monomer and a third structural unit derived from a zwitterionic vinyl-based monomer or a zwitterionic (meth)acryl-based monomer. A thickness of the negative electrode active material layer is greater than or equal to about 40 µm. The negative electrode active material layer may further include a conductive material.

The negative electrode is designed as a thick-film electrode having a negative electrode active material layer with a thickness of about 40 µm or more to increase capacity and energy density but decrease amounts of the current collector and a separator, and thus significantly reduce a volume and a weight of a rechargeable lithium battery, which may increase price competitiveness. However, the thick film negative electrode may provide a challenge of slowing down a movement speed of lithium ions, and thereby deteriorating rapid charging performance, but the movement speed of lithium ions may be increased by using the high ionic conductive binder including the first, second, and third structural units, improving electrical resistance and thus enhance the rapid charging performance, and also providing a desired adhesive strength.

The negative electrode active material layer may have a thickness of about 40 µm or more, for example, a range of about 40 µm to about 1000 µm, about 50 µm to about 800 µm, about 60 µm to about 700 µm, about 70 µm to about 600 µm, about 80 µm to about 500 µm, about 90 µm to about 400 µm, or about 100 µm to about 300 µm. When the thickness of the negative electrode active material layer is within the above ranges, energy density may be increased, but the amounts of the current collector and the separator may be decreased, which significantly reduces a volume and a weight of a rechargeable lithium battery and increase price competitiveness, and in addition, the high ionic conductive binder to be described below may be applied to improve the rapid charging performance.

### Negative Electrode Active Material

The negative electrode active material may include at least one of a material that reversibly intercalates/deintercalates lithium ions, a lithium metal, a lithium metal alloy, a material capable of doping/dedoping lithium, and transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, substantially spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), and a combination thereof. The Sn-based negative electrode active material may be or include at least one of Sn, SnO₂, a Sn-based alloy, and a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Binder

The binder is configured to adhere the negative electrode active material particles to each other, and to adhere the negative electrode active material to the current collector. The high ionic conductive binder according to the invention includes a first structural unit derived from a (meth)acrylic acid-based monomer; a second structural unit derived from a (C1-C10) alkylene glycol-based monomer; and a third structural unit derived from a zwitterionic vinyl-based monomer or a zwitterionic (meth)acryl-based monomer. The negative electrode active material layer may further include at least one of a non-aqueous binder, an aqueous binder, a dry binder, and a combination thereof in addition to a high ionic conductive binder.

A binder having the first and second structural units alone may increase adhesive strength of an active material layer to a current collector, but not sufficiently improve electrical resistance of the negative electrode active material layer. In addition, the binder having the first and second structural units is so insoluble in water as to form an active material layer, and also has too low a viscosity to form the negative electrode active material layer. Accordingly, the high ionic conductive binder additionally including the third structural unit in addition to the first and second structural units may increase a transfer degree of lithium ions and provide a desired adhesive strength.

Based on 100 wt% of the negative electrode active material layer, the high ionic conductive binder may be included in an amount in a range of about 0.2 wt% to about 5.0 wt%, for example, about 0.3 wt% to about 2.0 wt%, about 0.3 wt% to about 1.0 wt%, about 0.3 wt% to about 0.8 wt%, or about 0.4 wt% to about 0.8 wt%. When the high ionic conductive binder is included within the above ranges, energy density may not only be increased, but amounts of a current collector and a separator may also be reduced to significantly reduce a volume and a weight of a rechargeable lithium battery, and thus increase price competitiveness, and in addition improve rapid charging performance.

Hereinafter, each structural unit is described in detail.

The first structural unit derived from the (meth)acrylic acid-based monomer may be represented by Chemical Formula 1-1 or 1-2:

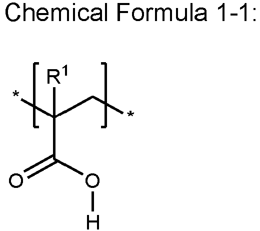

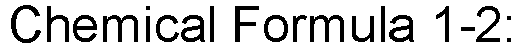

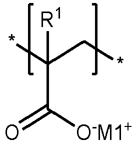

In Chemical Formulas 1-1 and 1-2, R¹ may be the same or different, and may each independently be or include a hydrogen atom or a C1 to C20 alkyl group, and M1 may be or include an alkali metal.

For example, the first structural unit may be derived from acrylic acid, R¹ can be or include all hydrogen atoms, and M1 may be derived from a metal ion in the electrolyte solution, for example, a lithium atom.

In some example embodiments, the first structural unit may be included in an amount in a range of about 50 wt% to about 98 wt%, about 60 wt% to about 90 wt%, or about 70 wt% to about 80 wt%, based on 100 wt% of the first structural unit, the second structural unit, and the third structural unit. In the above range, the high ionic conductive binder has an desired viscosity, thereby facilitating the manufacture of an active material layer, and improving the adhesive strength.

The second structural unit derived from a (C1-C10) alkylene glycol-based monomer may be represented by Chemical Formula 2-1 or 2-2:

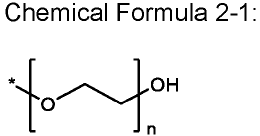

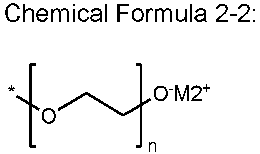

In Chemical Formula 2-1 or 2-2, M2 may be or include an alkali metal, and n may be an integer ranging from about 1 to about 100.

For example, the second structural unit can be derived from ethylene glycol, in which case n can be ranging from 5 to 20, or from 5 to 10, and M2 may be derived from a metal ion in the electrolyte solution, for example a lithium ion.

In some example embodiments, the second structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the high ionic conductive binder may contribute to further reducing resistance by increasing ionic conductivity.

The third structural unit derived from the zwitterionic vinyl-based monomer or the zwitterionic (meth)acryl-based monomer has both a cationic functional group and an anionic functional group in the molecule, and may have at least one of a vinyl group and a (meth)acrylic group for polymerization with other structural units.

The cationic functional group may be or include a functional group exhibiting a monovalent or polyvalent positive charge in an aqueous solvent, and may be or include, for example, at least one of a substituted or unsubstituted ammonium cation (NH₄⁺), an imidazolium cation, a pyrazolium cation, a pyridinium cation, a piperidinium cation, a piperazinium cation, a sulfide cation, a naphthalenium cation, and a guanidium cation, but is not limited thereto. For example, the cationic functional group may be or include a substituted or unsubstituted ammonium cation or an imidazolium cation.

The anionic functional group may be or include a functional group exhibiting a monovalent or polyvalent negative charge in an aqueous solvent, and may be or include, for example, a functional group having at least one of sulfur (S), nitrogen (N), carbon (C), phosphorus (P), and oxygen (O). For example, the anionic functional group may be or include at least one of -SO₃⁻, -CO₂⁻, -O⁻-, and -NR⁻. Here, R may be or include a substituted or unsubstituted alkyl group having 1 to 10 carbon atoms, or a haloalkyl group having 1 to 10 carbon atoms.

The third structural unit derived from a zwitterionic vinyl-based monomer or a zwitterionic (meth)acryl-based monomer may be represented by Chemical Formula 3-1 or 3-2.

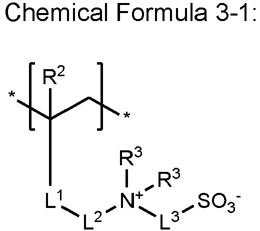

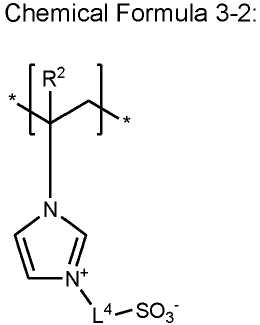

In Chemical Formulas 3-1 and 3-2, R² may be the same or different, and may each independently be or include a hydrogen atom or a C1 to C20 alkyl group; R³ may be the same or different, and may each independently be or include a hydrogen atom or a C1 to C20 alkyl group; L¹ may be or include *-(C=O)-NR³-CH₂-* or *-(C=O)-O-*; and L² to L⁴ may each independently be or include a single bond or a C1 to C20 alkylene group.

The third structural unit derived from the zwitterionic vinyl-based monomer or the zwitterionic (meth)acryl-based monomer may be derived from at least one of a sulfobetaine-based monomer, a phosphobetaine-based monomer, a carboxybetaine-based monomer, and an imidazolium-based monomer, and for example, may be derived from a sulfobetaine-based monomer or a vinylimidazolium sulfonate-based monomer.

When the third structural unit may be derived from sulfobetaine (SB) and may be represented by Chemical Formula 3-1, R² may be or include a methyl group; L¹ may be the same or different and may each independently be or include *-(C=O)-NR³-CH₂-* or *-(C=O)-O-*; and L² and L³ may both be or include ethylene groups.

When the third structural unit is derived from vinylimidazolium sulfonate (IMS) and is represented by Chemical Formula 3-2, R² may be or include a hydrogen atom; and L⁴ may be or include a butylene group.

In some example embodiments, the third structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the adhesive strength of the active material layer to the collector may be increased, and the electrical resistance may be reduced.

A weight ratio of the second structural unit to the third structural unit in the high ionic conductive binder may be in a range of about 1:2 to about 3:1, for example, about 1:1 to about 3:1, about 1:1 to about 2:1, or about 1:1 to about 1.5:1. When the second structural unit and the third structural unit are included in the above weight ratio, the high ionic conductive binder may increase the adhesive strength of the active material layer to the current collector, and also reduce the electrical resistance.

In some example embodiments, the high ionic conductive binder for a rechargeable lithium battery may further include a fourth structural unit derived from a (meth)acryl-based monomer.

The (meth)acryl-based monomer may include an amide group or a nitrile group. For example, the fourth structural unit may be derived from acrylonitrile.

The fourth structural unit derived from a (meth)acryl-based monomer may be represented by Chemical Formula 4 below.

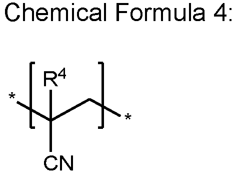

In Chemical Formula 4, R⁴ may be or include a hydrogen atom or a C1 to C20 alkyl group.

The fourth structural unit may be derived from, for example, acrylonitrile. For example, R⁴ may be or include a hydrogen atom.

In some example embodiments, based on 100 wt% of the first structural unit, the second structural unit, the third structural unit, and the fourth structural unit, the first structural unit may be included in an amount in a range of about 30 wt% to about 70 wt%, the second structural unit may be included in an amount in a range of about 1 wt% to about 15 wt%, the third structural unit may be included in an amount in a range of about 1 wt% to about 15 wt%, and the fourth structural unit may be included in an amount in a range of about 20 wt% to about 50 wt%. For example, based on 100 wt% of the first structural unit, the second structural unit, the third structural unit, and the fourth structural unit, the first structural unit may be included in an amount in a range of about 40 wt% to about 60 wt%, the second structural unit may be included in an amount in a range of about 2 wt% to about 10 wt%, the third structural unit may be included in an amount of about 2 wt% to about 10 wt%, and the fourth structural unit may be included in an amount in a range of about 25 wt% to about 45 wt%. As another example, the first structural unit may be included in an amount in a range of about 45 wt% to about 55 wt%, the second structural unit may be included in an amount in a range of about 5 wt% to about 10 wt%, the third structural unit may be included in an amount in a range of about 5 wt% to about 10 wt%, and the fourth structural unit may be included in an amount in a range of about 30 wt% to about 40 wt%. In the above range, the high ionic conductive binder has an desired viscosity, thereby facilitating the manufacture of an active material layer and improving adhesive strength.

The high ionic conductive binder according to some example embodiments may further include a lithium salt, in which case better lithium ionic conductivity may be achieved within the electrode, thereby improving the electrochemical performance of the battery. The high ionic conductive binder may form a chemical bond, such as an ionic bond, with the cation and/or anion of the lithium salt, or the binder and the lithium salt may be simply mixed. The lithium salt may be or include any common lithium salt included in rechargeable lithium batteries without limitation, and may be or include, for example, at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, LiC₄F₉SO₃, LiFSI, LiTFSI, LiOTf, LiDFOB, LiBOB, and a combination thereof.

The negative electrode active material layer according to some example embodiments may further include, in addition to the aforementioned high ionic conductive binder, at least one of a non-aqueous binder, an aqueous binder, a dry binder, and a combination thereof, and may further include an aqueous binder.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed. The alkali metal may be or include at least one of Na, K, and Li.

Based on 100 wt% of the negative electrode active material layer, the aqueous binder may be included in an amount in a range of about 0.1 wt% to about 2.0 wt%, for example, about 0.2 wt% to about 1.0 wt%, about 0.3 wt% to about 1.0 wt%, about 0.3 wt% to about 0.6 wt%, or about 0.4 wt% to about 0.6 wt%. In addition, based on 100 wt% of the negative electrode active material layer, the cellulose-based compound may be included in an amount in a range of about 0.5 wt% to about 2.0 wt%, for example, about 0.5 wt% to about 1.5 wt%, or about 1.0wt% to about 1.5wt%. When the aqueous binder and the cellulose-based compound are included within the above ranges, energy density may not only be increased, but also amounts of a current collector and a separator may be reduced, so as to significantly reduce a volume and a weight of a rechargeable lithium battery, and thus increase price competitiveness, as well as improve rapid charging performance.

### Method of Preparing High Ionic Conductive Binder

The high ionic conductive binder according to the invention may be prepared by polymerizing a mixture of the monomers by a conventional method known to those skilled in the art. The polymerization may be emulsion polymerization, suspension polymerization, solution polymerization, and the like.

The emulsifier may be or include at least one of a higher fatty acid alkali salt, N-acrylamino acid salt, alkyl ether carbonate, acylated peptide, alkyl sulfonate, alkyl benzene sulfonate, alkyl amino acid salt, alkyl naphthalene sulfonate, sulfosuccinate, sulfonated oil, alkyl sulfate, alkyl ether sulfate, alkyl aryl ether sulfate, alkyl amide sulfate, alkyl phosphate, alkyl ethoxyphosphate and alkyl aryl ether phosphate, and a combination thereof. An example of an emulsifier may be or include sodium dodecylbenzene sulfonate. The alkyl group may be or include an alkyl group having about 1 to about 20 carbon atoms.

A content of the emulsifier may be in a range of about 0.1 to about 3 parts by weight, or about 0.1 to about 2 parts by weight, based on 100 parts by weight of the total content of the monomer mixture. When the content of the emulsifier is within the above range, the adhesive strength may be further improved, and a high ionic conductive binder having a desired size for good dispersion can be obtained.

The initiator may be or include an azo compound initiator such as at least one of azobisisobutyronitrile, ammonium persulfate, potassium persulfate, hydrogen peroxide, t-butyl hydroperoxide, and a combination thereof.

A content of the initiator may be in a range of about 0.1 to about 3 parts by weight, or may be about 0.1 to about 2 parts by weight, based on 100 parts by weight of the total content of the monomer mixture.

The high ionic conductive binder may have a weight average molecular weight (Mw) in a range of about 20,000 g/mol to about 1,500,000 g/mol, for example, about 50,000 g/mol to about 2,500,000 g/mol. In the above range, the high ionic conductive binder may be applied to the active material layer. Here, the "weight average molecular weight" may be a value calculated in polystyrene conversion terms by gel permeation chromatography.

### Conductive Material

The conductive material is included to provide electrode conductivity, and any electrically conductive material may be included as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

For example, the negative electrode active material layer may include about 90 wt% to about 99 wt%, or about 90 wt% to about 99.5 wt% of the negative electrode active material, about 0.5 wt% to about 5 wt% of the binder, and about 0 wt% to about 5 wt% of the conductive material.

The negative electrode current collector may include at least one of a copper foil, a nickel foil, a stainless steel foil, a titanium foil, a nickel foam, a copper foam, a polymer substrate coated with a conductive metal, and a combination thereof.

### Rechargeable Lithium Battery

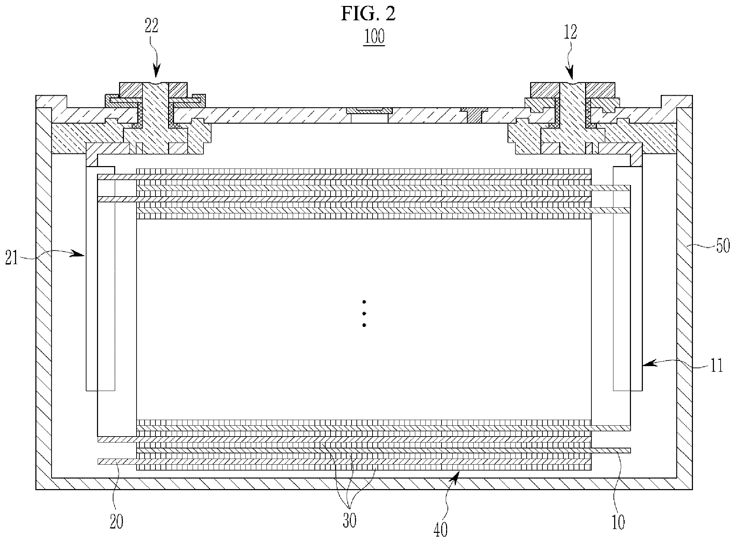

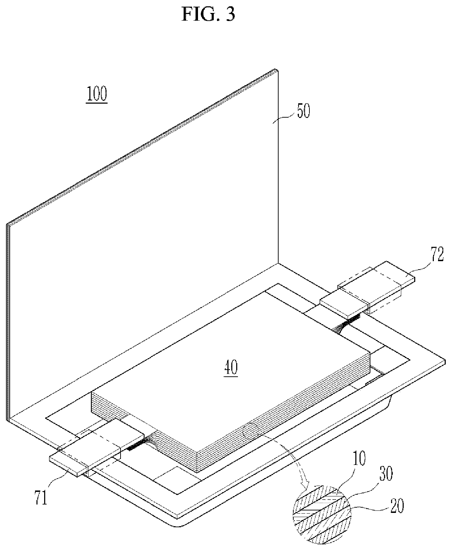

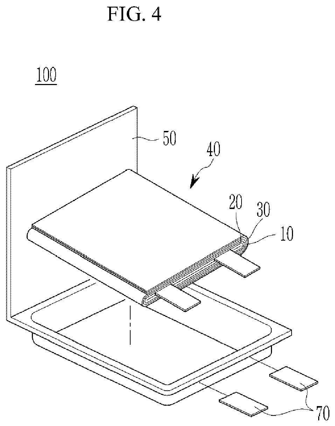

The rechargeable lithium battery may be classified into cylindrical, prismatic, pouch, or coin-type batteries, and the like depending on its shape. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/72/72 forming an electrical path for inducing the current formed in the electrode assembly 40 to the outside of the battery 100.

The rechargeable lithium battery includes the negative electrode; the positive electrode; and the electrolyte. Because the negative electrode has been described above, a detailed explanation thereof is omitted below.

### Positive Electrode

The positive electrode may include a current collector, and a positive electrode active material layer formed on the current collector. The positive electrode active material layer includes a positive electrode active material, and may further include a binder and/or a conductive material.

A content of the positive electrode active material may be in a range of about 90 wt% to about 99 wt%, or about 90 wt% to about 99.5 wt% based on 100 wt% of the positive electrode active material layer, and the contents of the binder and conductive material may be in a range of about 0.5 wt% to about 5 wt%, respectively, based on 100 wt% of the positive electrode active material layer.

The positive electrode active material may be or include a compound (lithiated intercalation compound) capable of intercalating and deintercalating lithium. For example, one or more types of composite oxides of lithium, and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, and a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, and a combination thereof; X is or includes at least one of Al, Ni, Co, Mn, Cr, Fe, Mg, Sr, V, a rare earth element, and a combination thereof; D is or includes at least one of O, F, S, P, and a combination thereof; G is or includes at least one of Al, Cr, Mn, Fe, Mg, La, Ce, Sr, V, and a combination thereof; and L¹ is or includes at least one of Mn, Al, and a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, and a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M² is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of from Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel-based positive electrode active material in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high nickel-based positive electrode active material may achieve high capacity, and may be applied to high-capacity, high-density rechargeable lithium batteries.

The binder is configured to improve binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the electrically conductive material causes a chemical change in the battery. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

### Electrolyte

An electrolyte for a rechargeable lithium battery may be or include, for example, an electrolyte solution, which may include a non-aqueous organic solvent and a lithium salt.

The non-aqueous organic solvent is configured as a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, and a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be included alone or in a mixture of two or more types of solvent, and when two or more types are included in a mixture, a mixing ratio can be adjusted as desired according to the desired battery performance, which is typically known to those working in the field.

When using a carbonate-based solvent, a cyclic carbonate and a chain carbonate may be mixed, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed and included in a volume ratio in a range of about 1:1 to about 30:1.

The electrolyte solution may further include at least one of vinylethyl carbonate, vinylene carbonate, and an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent is configured to supply lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, **LiI,** LiN(SO₃C₂F₃)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers in a range of about 1 to about 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has a desired ionic conductivity and viscosity, and thus a desired or improved performance can be achieved, and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one surface, or on both surfaces, of the porous substrate.

The porous substrate may be or include a polymer film formed of or including any one polymer such as at least one of a polyolefin such as polyethylene and polypropylene, a polyester such as at least one of polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and TEFLON(polytetrafluoroethylene), or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

In one example, the organic material of the coating layer may include the aforementioned binder according to some example embodiments. That is, in some example embodiments, a separator for a rechargeable lithium battery includes a porous substrate and a coating layer on one surface, or on both surfaces, of the porous substrate, wherein the coating layer includes the aforementioned binder. In the coating layer, the binder may be included in an amount in a range of about 1 wt% to about 100 wt%, for example, the binder may be included in an amount of about 1 wt% to about 10 wt%, about 1 wt% to about 5 wt%, or about 80 wt% to about 100 wt%, about 90 wt% to about 100 wt%, or about 91 wt% to about 99 wt%, and the like, together with the inorganic material. The separator including the aforementioned binder in the coating layer may exhibit a desired or improved heat resistance and mechanical strength.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

A thickness of the coating layer may be in a range of about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Preparation Example 1

Based on 100 parts by weight of water, about 2 parts by weight of surfactant were mixed. Subsequently, 20 parts by weight of a monomer mixture including 50 wt% of acrylic acid (AA), 35 wt% of acrylonitrile (AN), 8 wt% of sulfobetaine (SB), and 7 wt% of ethylene glycol (EG) were mixed. Subsequently, a high ionic conductive binder comprising a copolymer was prepared by emulsion polymerizing the monomer mixture by mixing about 0.5 parts by weight of an azo compound initiator. Emulsion polymerization was conducted at about 75°C for 4 hours under conditions of pH 3 to 5.

### Preparation Example 2

A high ionic conductive binder was manufactured substantially in the same manner as in Preparation Example 1 with a difference that using a monomer mixture including 55 wt% of acrylic acid (AA) and 45 wt% of acrylonitrile (AN).

### Preparation Example 3

A high ionic conductive binder was manufactured substantially in the same manner as in Preparation Example 1 with a difference that using a monomer mixture including 50 wt% of acrylic acid (AA) and 50 wt% of sulfobetaine (SB).

### Preparation Example 4

A high ionic conductive binder was manufactured substantially in the same manner as in Preparation Example 1 with a difference that using a monomer mixture including 45 wt% of acrylic acid (AA), 40 wt% of acrylonitrile (AN), and 15 wt% of sulfobetaine (SB).

### Preparation Example 5

A high ionic conductive binder was manufactured substantially in the same manner as in Preparation Example 1 with a difference that using a monomer mixture including 45 wt% of acrylic acid (AA), 40 wt% of acrylonitrile (AN), and 15 wt% of ethylene glycol (EG).

### Example 1

### (1) Manufacturing of Negative Electrode

93.9 wt% of a graphite negative electrode active material, 4 wt% of a silicon-carbon composite negative electrode active material, 0.5 wt% of the high ionic conductive binder of Preparation Example 1, 0.5 wt% of carboxymethyl cellulose (CMC), 1.0 wt% of a styrene-butadiene rubber (SBR), and 0.1 wt% of a conductive material were mixed in a water solvent to prepare a negative electrode active material layer slurry. The negative electrode active material layer slurry was coated on a copper foil current collector, and then dried and compressed to manufacture a negative electrode having a negative electrode active material layer with a thickness of 150 µm. The thickness of the negative electrode active material layer was measured by taking a scanning electron microscope image on the cross-section of a negative electrode finally obtained by the compression.

### (2) Manufacturing of Positive Electrode

97.0 wt% of a (LiNi_{0.88}Co_{0.105}Al_{0.015}O₂) positive electrode active material, 1.5 wt% of a polyvinylidene fluoride binder, and 1.5 wt% of a carbon nanotube conductive material were mixed to prepare a positive electrode active material layer slurry, and this positive electrode active material layer slurry was coated on an aluminum foil current collector, and then dried and compressed to manufacture a positive electrode.

### (3) Preparation of Electrolyte Solution

An electrolyte solution was prepared by mixing ethylene carbonate (EC), ethylmethyl carbonate (EMC), and dimethyl carbonate (DMC) in a volume ratio of 2:4:4 to prepare an organic solvent and then, dissolving LiPF₆ lithium salt at a concentration of 1.15 M in the organic solvent.

### (4) Manufacturing of Rechargeable Lithium Battery Cell

The positive and negative electrodes were assembled with a polyethylene separator coated with an acryl-based function layer to obtain an electrode assembly, and after housing the electrode assembly into a prismatic case, the electrolyte solution was injected thereinto, manufacturing a rechargeable lithium battery cell.

### Examples 2

A negative electrode and a rechargeable lithium battery cell were manufactured substantially in the same manner as in Example 1 with a difference that 93.9 wt% of a graphite negative electrode active material, 4 wt% of a silicon-carbon composite negative electrode active material, 0.7 wt% of the high ionic conductive binder of Preparation Example 1, 0.3 wt% of carboxymethyl cellulose (CMC), 1.0 wt% of a styrene-butadiene rubber (SBR), and 0.1 wt% of a conductive material were mixed in a water solvent to prepare a negative electrode active material layer slurry.

### Examples 3

A negative electrode and a rechargeable lithium battery cell were manufactured substantially in the same manner as in Example 1 with a difference that 93.4 wt% of a graphite negative electrode active material, 4 wt% of a silicon-carbon composite negative electrode active material, 0.5 wt% of the high ionic conductive binder of Preparation Example 1, 0.5 wt% of carboxymethyl cellulose (CMC), 1.5 wt% of a styrene-butadiene rubber (SBR), and 0.1 wt% of a conductive material were mixed in a water solvent to prepare a negative electrode active material layer slurry.

### Examples 4

A negative electrode and a rechargeable lithium battery cell were manufactured substantially in the same manner as in Example 1 with a difference that 93.9 wt% of a graphite negative electrode active material, 4 wt% of a silicon-carbon composite negative electrode active material, 0.3 wt% of the high ionic conductive binder of Preparation Example 1, 0.7 wt% of carboxymethyl cellulose (CMC), 1.0 wt% of a styrene-butadiene rubber (SBR), and 0.1 wt% of a conductive material were mixed in a water solvent to prepare a negative electrode active material layer slurry.

### Examples 5

A negative electrode and a rechargeable lithium battery cell were manufactured substantially in the same manner as in Example 1 with a difference that 93.7 wt% of a graphite negative electrode active material, 4 wt% of a silicon-carbon composite negative electrode active material, 1.0 wt% of the high ionic conductive binder of Preparation Example 1, 0.2 wt% of carboxymethyl cellulose (CMC), 1.0 wt% of a styrene-butadiene rubber (SBR), and 0.1 wt% of a conductive material were mixed in a water solvent to prepare a negative electrode active material layer slurry. **Comparative Example 1**

A negative electrode and a rechargeable lithium battery cell were manufactured substantially in the same manner as in Example 1 with a difference that each content of the high ionic conductive binder of Preparation Example 1, the carboxy methyl cellulose (CMC), and the styrene-butadiene rubber (SBR) were changed as shown in Table 1 in the manufacture of the negative electrode.

### Comparative Examples 2 to 5

A negative electrode and a rechargeable lithium battery cell were manufactured substantially in the same manner as in Example 1, with a difference that the binder of Preparation Example 2 in Comparative Example 2, the binder of Preparation Example 3 in Comparative Example 3, the binder of Preparation Example 4 in Comparative Example 4, and the binder of Preparation Example 5 in Comparative Example 5 were respectively used instead of the high ionic conductive binder of Preparation Example 1 in the manufacture of the negative electrode.

### Reference Example 1

A negative electrode and a rechargeable lithium battery cell were manufactured substantially in the same manner as in Example 1, with a difference that 93.4 wt% of a graphite negative electrode active material, 4 wt% of a silicon-carbon composite negative electrode active material, 0.1 wt% of the high ionic conductive binder of Preparation Example 1, 0.9 wt% of carboxymethyl cellulose (CMC), 1.5 wt% of a styrene-butadiene rubber (SBR), and 0.1 wt% of a conductive material were mixed in a water solvent to prepare a negative electrode active material layer slurry.

Table 1 shows the binder design details for the examples and the comparative examples.

### Evaluation Example 1: Electrode Plate Adhesive Strength

The negative electrodes according to Examples and Comparative Examples were respectively measured with respect to adhesive strength between current collector and negative electrode active material layer by using a Universal Testing Machine (UTM) tensile strength tester. A sample was prepared by attaching a slide glass (length x width = 7 cm x 2.5 cm) to one side of a double-sided adhesive tape (length x width = 4 cm x 2.5 cm) and each of the negative electrodes (length x width = 7 cm x 2.5 cm) onto the other side of the double-sided adhesive tape. The sample was mounted on the UTM tensile strength tester and then, measured with respect to adhesive strength by peeling off the negative electrode from the slide glass at a peeling angle: 180 °, a peeling temperature: 25 °C, and a peeling speed: 100 mm/min, and the results are shown in Table 2.

### Evaluation Example 2: Battery Cell Characteristics Evaluation

### 1. Charging Rate

The battery cells using each of the binders of Examples and Comparative Examples were evaluated by charging them to a cut-off voltage of 4.25 V at constant current of 1.0 C at 25 °C. In the corresponding charging method, maximum charge capacity at which the cells reached 4.25 V was used to calculate a percentage (%) of the 'maximum charge capacity / total battery capacity,' which was shown as a charging rate in Table 1.

### 2. DC internal resistance (DC-IR; Direct current internal resistance)

The battery cells manufactured by using each of the binders of Examples and Comparative Examples and having cell capacity of 75 mAh were charged with a constant current/constant voltage under conditions of 0.2 C, 4.25 V, and 0.05 C cut-off, paused for 10 minutes, discharged at a constant current of 0.33 C under a condition of 2.80 V cut-off, and paused for 10 minutes at 25 °C to perform the 1^{st} charging and discharging and then, measured with respect to a voltage drop (V) occurring when a current of 1 C was passed for 10 second at SOC50 (a state of being charged to 50% of charge capacity based on 100% of total charge capacity, which also indicates a state of being discharged to 50% during the discharging), and the voltage drop was then used to measure direct current internal resistance (DC-IR), and the results are shown in Table 1.

### 3. 200 Cycle-life Retention Rate

The cells of Examples and Comparative Examples were constant current-charged to a voltage of 4.2 V at a rate of 0.5 C and subsequently, cut off at a rate of 0.025 C in the constant voltage mode at 25 °C. Subsequently, the cells were discharged to 2.5 V at a rate of 0.5 C, and this charge and discharge cycle was 200 times repeated to evaluate a capacity retention rate according to the number of cycles, that is, cycle-life characteristics, and the results are shown in Table 1 below.

**Table 1:**

| | CMC (wt%) | High ionic conductive binder (wt%) | SBR (wt %) | Electrode plate adhesive strength (gf/mm) | Rapid chargi ng rate (%) | DC-IR (Ω) | Rapid charging cycle-life retention rate (%) |
|---|---|---|---|---|---|---|---|
| Example 1 | 0.5 | 0.5 (Preparation Example 1) | 1.0 | 2.72 | 80 | 6.80 | 97 |
| Example 2 | 0.3 | 0.7 (Preparation Example 1) | 1.0 | 2.57 | 80 | 6.59 | 95 |
| Example 3 | 0.5 | 0.5 (Preparation Example 1) | 1.5 | 2.05 | 78.6 | 7.16 | 95 |
| Example 4 | 0.7 | 0.3 (Preparation Example 1) | 1.0 | 1.82 | 78 | 6.98 | 93 |
| Example 5 | 0.2 | 1.0 (Preparation Example 1) | 1.0 | 2.66 | 79.1 | 6.76 | 94 |
| Comparative Example 1 | 1.0 | 0 | 1.0 | 2.04 | 62 | 7.18 | 70 |
| Comparative Example 2 | 0.5 | 0.5 (Preparation Example 2) | 1.0 | 2.11 | 68 | 9.33 | 88 |
| Comparative Example 3 | 0.5 | 0.5 (Preparation Example 3) | 1.0 | 2.36 | 73 | 8.21 | 85 |
| Comparative Example 4 | 0.5 | 0.5 (Preparation Example 4) | 1.0 | 2.57 | 76 | 7.34 | 90 |
| Comparative Example 5 | 0.5 | 0.5 (Preparation Example 5) | 1.0 | 2.39 | 70 | 7.86 | 84 |
| Reference Example 1 | 0.9 | 0.1 (Preparation Example 1) | 1.5 | 1.63 | 65 | 7.76 | 74 |

Referring to Table 1, the examples, in which a high ionic conductive binder including all of the first to third structural units was included in a negative electrode active material layer having a thickness of 40 µm or more, compared with Comparative Example 1 not including the high ionic conductive binder and Comparative Examples 2 to 5 not including at least one of the structural units, exhibited all improved electrode plate adhesive strength and battery characteristics. Additionally, Reference Example 1, in which all of the first to third structural units were included in a negative electrode active material layer having a thickness of 40 µm or more, compared with Comparative Example 1 not including the high ionic conductive binder, exhibited improved electrode plate adhesive strength and battery characteristics, which were inferior to the electrode plate adhesive strength and battery characteristics of the examples.

While examples of this disclosure have been described in connection with what is presently considered to be practical example embodiments, it is to be understood that the disclosure is not limited to the disclosed example embodiments. On the contrary, the disclosure is intended to cover various modifications and equivalent arrangements included within the scope of the appended claims.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A negative electrode, comprising:
a current collector; and
a negative electrode active material layer located on the current collector and including a negative electrode active material and a high ionic conductive binder;
wherein the high ionic conductive binder comprises a first structural unit derived from a (meth)acrylic acid-based monomer; a second structural unit derived from a (C1-C10) alkylene glycol-based monomer; and a third structural unit derived from a zwitterionic vinyl-based monomer or a zwitterionic (meth)acryl-based monomer, and
a thickness of the negative electrode active material layer is greater than or equal to 40 µm.

2. The negative electrode as claimed in claim 1, wherein the thickness of the negative electrode active material layer is in a range of 40 µm to 1000 µm, preferably in a range of 100 µm to 300 µm.

3. The negative electrode as claimed in claim 1 or 2, wherein the negative electrode active material comprises at least one of a carbon-based negative electrode active material, and a silicon-based negative electrode active material.

4. The negative electrode as claimed in any of claims 1-3, wherein the high ionic conductive binder is included in an amount in a range of 0.2 wt% to 5.0 wt% based on 100 wt% of the negative electrode active material layer, preferably wherein the high ionic conductive binder is included in an amount in a range of 0.4 wt% to 0.8 wt% based on 100 wt% of the negative electrode active material layer.

5. The negative electrode as claimed in any of claims 1-4, wherein the first structural unit is represented by Chemical Formula 1-1 or 1-2, and
the second structural unit is represented by Chemical Formula 2-1 or 2-2: 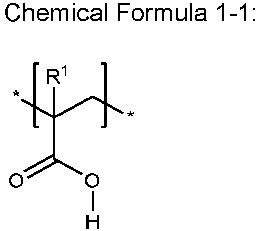 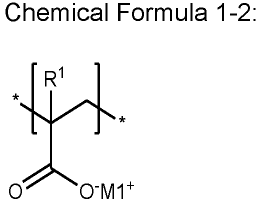
wherein, in Chemical Formulas 1-1 and 1-2:
R¹ is the same or different and each independently comprises one of a hydrogen atom and a C1 to C20 alkyl group; and
M1 comprises an alkali metal, 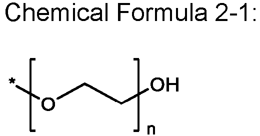 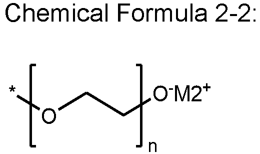
wherein, in Chemical Formulas 2-1 and 2-2:
M2 comprises an alkali metal, and
n is an integer between about 1 and about 100.

6. The negative electrode as claimed in any of claims 1-5, wherein the zwitterionic vinyl-based monomer or zwitterionic (meth)acryl-based monomer comprises at least one cationic functional group comprising at least one of a substituted or unsubstituted ammonium cation, an imidazolium cation, a pyrazolium cation, a pyridinium cation, a piperidinium cation, a piperazinium cation, a sulfide cation, a naphthalenium cation, and a guanidium cation.

7. The negative electrode as claimed in any of claims 1-6, wherein the zwitterionic vinyl-based monomer or zwitterionic (meth)acryl-based monomer comprises at least one anionic functional group comprising one of -SO₃⁻, -CO₂⁻, - O⁻-, and -NR⁻,
wherein R comprises a substituted or unsubstituted C1 to C10 alkyl group or a C1 to C10 haloalkyl group.

8. The negative electrode as claimed in any of claims 1-7, wherein the zwitterionic vinyl-based monomer or zwitterionic (meth)acryl-based monomer comprises at least one of a sulfobetaine-based monomer, a phosphobetaine-based monomer, a carboxybetaine-based monomer, and an imidazolium-based monomer.

9. The negative electrode as claimed in any of claims 1-8, wherein the third structural unit is represented by one of Chemical Formula 3-1 and 3-2: 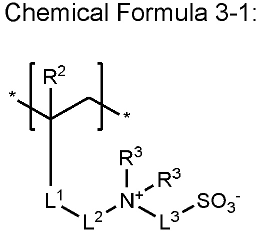 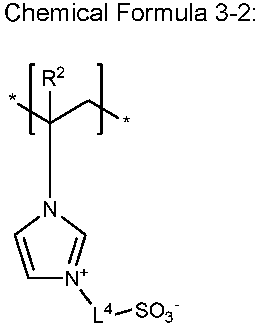 wherein, in Chemical Formulas 3-1 and 3-2:
R² is the same or different, and each independently comprises one of a hydrogen atom and a C1 to C20 alkyl group;
R³ is the same or different and each independently comprises one of a hydrogen atom and a C1 to C20 alkyl group;
L¹ comprises one of *-(C=O)-NR³-CH₂-* and *-(C=O)-O-*; and
L² to L⁴ each independently comprises one of a single bond and a C1 to C20 alkylene group.

10. The negative electrode as claimed in any of claims 1-9, wherein based on 100 wt% of the first structural unit, the second structural unit, and the third structural unit:
the first structural unit is included in an amount in a range of 50 wt% to 98 wt%,
the second structural unit is included in an amount in a range of 1 wt% to 25 wt%, and
the third structural unit is included in an amount in a range of 1 wt% to 25 wt%.

11. The negative electrode as claimed in any of claims 1-10, wherein the high ionic conductive binder further comprises a fourth structural unit derived from a (meth)acryl-based monomer, optionally wherein the (meth)acryl-based monomer comprises one of an amide group and a nitrile group.

12. The negative electrode as claimed in claim 11, wherein the fourth structural unit is represented by Chemical Formula 4: 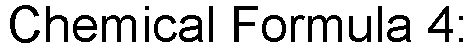 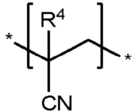 wherein, in Chemical Formula 4, R⁴ comprises one of a hydrogen atom and a C1 to C20 alkyl group.

13. The negative electrode as claimed in any of claims 11-12, wherein based on 100 wt% of the first structural unit, the second structural unit, the third structural unit, and the fourth structural unit:
the first structural unit is included in an amount in a range of 30 wt% to 70 wt%,
the second structural unit is included in an amount in a range of 1 wt% to 15 wt%,
the third structural unit is included in an amount in a range of 1 wt% to 15 wt%, and
the fourth structural unit is included in an amount in a range of 20 wt% to 50 wt%.

14. The negative electrode as claimed in any of claims 1-13,
wherein the high ionic conductive binder further comprises a lithium salt; and/or
wherein the negative electrode active material layer further comprises an aqueous binder in addition to the high ionic conductive binder, optionally wherein the negative electrode active material layer further comprises a cellulose-based compound.

15. A rechargeable lithium battery comprising:
the negative electrode as claimed in any of claims 1-14;
a positive electrode; and
an electrolyte.
